# EUROPEAN PATENT APPLICATION

(11) **EP 2 372 270 A1**
(43) Date of publication of application: **05.10.2011**
(21) Application number: 09833165.5
(22) Date of filing: 11.12.2009
(51) Int. Cl.: F24J 3/08, F24F 3/00, F28D 21/00

(54) **IN-GROUND HEAT EXCHANGER AND AIR CONDITIONING SYSTEM EQUIPPED WITH SAME**

(30) Priority: 19.12.2008 JP 2008323384; 30.10.2009 JP 2009250846
(71) Applicant: Daikin Industries, Ltd., Osaka-shi, Osaka 530-8323 (JP)
(72) Inventor: ASAI, Hideaki, Sakai-shi Osaka 591-8511 (JP); KAWABATA, Katsuhiro, Sakai-shi Osaka 591-8511 (JP); TANIMOTO, Keisuke, Sakai-shi Osaka 591-8511 (JP); ZHAI, Hui, Sakai-shi Osaka 591-8511 (JP)
(74) Representative: HOFFMANN EITLE
(86) International application number: PCT/JP2009/006811
(87) International publication number: WO 2010/070856

(57) **Abstract**

An outer pipe (11), which is buried under the ground, is provided, and a heat transfer pipe (12), in which heat exchange fluid flows, is inverted into the outer pipe (11). A heat medium (13) is sealed in the outer pipe (11). At least a part of the heat transfer pipe (12) is formed by a flat body (12e, ...) that is formed by a flat pipe (12e, 14) or a composite pipe (15) in which a plurality of pipes (15a) are arranged in a flat shape. A flat side of the flat body (12e, ...) contacts an inner peripheral surface of the outer pipe (11).

## Description

### TECHNICAL FIELD

The present invention relates to underground heat exchangers that exchange heat between fluid to be heat-exchanged and soil under the ground.

### BACKGROUND ART

Conventionally, underground heat exchangers are known which exchange heat between fluid to be heat-exchanged (hereinafter referred to as the "heat exchange fluid") and soil under the ground. A configuration in which heat is exchanged between the heat exchange fluid and the soil via a heat medium that changes in phase, etc. is known as such underground heat exchangers.

Specifically, as disclosed in, e.g., Patent Document 1, a pipe containing a heat medium is buried under the ground, and a heat exchanger in which heat exchange fluid flows is provided so as to exchange heat with the heat medium in the pipe, which is evaporated by geothermal heat. Thus, heat of the heat medium evaporated in the pipe buried under the ground is transferred to the heat exchange fluid by the heat exchanger, and is used as a heat source of heating in a circuit in which the heat exchange fluid flows.

### CITATION LIST

### PATENT DOCUMENT

PATENT DOCUMENT 1: International Publication No. WO2004/111559

### SUMMARY OF THE INVENTION

### TECHNICAL PROBLEM

However, the heat exchanger of Patent Document 1 performs heat exchange by line contact between the pipes. Thus, this heat exchanger has low heat exchange efficiency, and each heat-transfer pipe needs to have a certain length in order to ensure heat exchange capability. That is, the overall length of the heat exchanger is increased, thereby increasing manufacturing cost and on-site construction cost of the heat exchanger.

The present invention was developed in view of the above problem, and it is an object of the present invention to enable heat exchange fluid to efficiently exchange heat with soil under the ground, in a heat exchanger in which a heat-transfer pipe having the heat exchange fluid flowing therein is inserted in an outer pipe, and a heat medium is sealed in the outer pipe.

### SOLUTION TO THE PROBLEM

In order to solve the above problem, a first aspect of the invention is intended for an underground heat exchanger including: an outer pipe (11) that is buried under a ground; a heat-transfer pipe (12) which is inserted into the outer pipe (11), and in which heat exchange fluid flows; and a heat medium (13) that is sealed in the outer pipe (11), where the underground heat exchanger exchanges heat with soil by using a change in phase of the heat medium (13), wherein at least a part of the heat-transfer pipe (12) is formed by a flat body (12e, ...) that is formed by a flat pipe (12e, 14) or a composite pipe (15) in which a plurality of pipes (15a) are arranged in a flat shape, and a flat side of the flat body (12e, ...) contacts an inner peripheral surface of the outer pipe (11).

According to the above configuration, by using this underground heat exchanger as, e.g., an evaporator in an air conditioning system that performs a heating operation, a cycle is repeated in which the heat medium (13) condensed on a surface of the heat-transfer pipe (12) flows along an outer surface of the heat-transfer pipe (12) to an inner peripheral surface of the outer pipe (11), and is evaporated on the inner peripheral surface of the outer pipe (11) by geothermal heat. In this underground heat exchanger, at least a part of the heat-transfer pipe (12) is formed by the flat body (12e, ...). Thus, the heat medium (13) condensed on the outer peripheral surface of the heat-transfer pipe (12) is less likely to scatter or fall. That is, on the second main body portion (12e), the heat medium (13) can efficiently obtain heat from the heat exchange fluid within the heat-transfer pipe (12).

Moreover, by using this underground heat exchanger as a condenser in an air conditioning system that performs a cooling operation, a cycle is repeated in which the heat medium (13) evaporated on the surface of the heat-transfer pipe (12) is condensed on the inner peripheral surface of the outer pipe (11) by geothermal heat, and the evaporated heat medium (13) moves to the surface of the heat-transfer pipe (12). Thus, the heat medium (13) can be efficiently circulated in the entire length of the outer pipe (11) in a longitudinal direction. In this case as well, forming at least a part of the heat-transfer pipe (12) in the flat shape can reduce the size of a refrigerant accumulating portion formed between the heat-transfer pipe (12) and the inner peripheral surface of the outer pipe (11). Thus, the heat medium (13) condensed on the inner peripheral surface of the outer pipe (11) can be effectively guided to the heat-transfer pipe (12). Forming the heat-transfer pipe (12) in the flat shape can also ensure a larger contact area between the heat-transfer pipe (12) and the outer pipe (11), whereby direct heat transfer efficiency is also further increased.

A second aspect of the invention is intended for the underground heat exchanger of the first aspect of the invention, wherein the heat-transfer pipe (12) is formed so as to extend from a top of the outer pipe (11) and to be bent at a bottom of the outer pipe (11) to return to the top.

In this configuration, the heat-transfer pipe (12) is formed in the outer pipe (11) so as to extend from the top of the outer pipe (11) and to be bent at the bottom of the outer pipe (11) to return to the top. Thus, when this underground heat exchanger is used in an air conditioning system capable of performing heating and cooling operations, the heat medium (13) can be efficiently circulated in the entire length of the outer pipe (11) in the longitudinal direction by the single heat-transfer pipe (12) in the heating and cooling operations.

A third aspect of the invention is intended for the underground heat exchanger of the first or second aspect of the invention, wherein the heat-transfer pipe (12) includes a first main body portion (12d) extending from a top to a bottom of the outer pipe (11), and a second main body portion (12e) extending from the bottom to the top of the outer pipe (11), and at least one of the first and second main body portions (12d, 12e) is formed in a helical shape, and a portion having the helical shape is the flat body (12e, ...).

In this configuration, heat exchange is performed mainly in the portion formed in the helical shape in the heat-transfer pipe (12).

A fourth aspect of the invention is intended for the underground heat exchanger of the third aspect of the invention, wherein a plurality of grooves (12f), which extend in a direction of gravity in an installed state, are formed in an outer peripheral surface of the heat-transfer pipe (12).

In this configuration, the grooves (12f) are provided in the heat-transfer pipe (12). Thus, when, e.g., this underground heat exchanger is used as an evaporator in an air conditioning system that performs a heating operation, the heat medium (13) condensed on the outer peripheral surface of the heat-transfer pipe (12) can be guided to the inner peripheral surface of the outer pipe (11) by surface tension and a pressure difference in a liquid film in the grooves (12f). Moreover, when this underground heat exchanger is used as a condenser in an air conditioning system that performs a cooling operation, the heat medium (13) condensed on the inner peripheral surface of the outer pipe (11) can be more effectively guided to the outer peripheral surface of the heat-transfer pipe (12) by the grooves (12f). Thus, in the present invention, the condensed heat medium (13) can be effectively guided to a portion where heat exchange is to be performed (the inner peripheral surface of the outer pipe (11) and the outer peripheral surface of the heat-transfer pipe (12)) by the grooves (12f) of the heat-transfer pipe (12).

A fifth aspect of the invention is intended for the underground heat exchanger of any one of the first to fourth aspects of the invention, wherein a groove (11a) extending in a circumferential direction of the outer pipe (11) is formed in the inner peripheral surface of the outer pipe (11).

In this configuration, the condensed heat medium (13) can be spread in the circumferential direction by the groove (11a) in the inner peripheral surface of the outer pipe (11).

A sixth aspect of the invention is intended for the underground heat exchanger of the fifth aspect of the invention, wherein the groove (11a) of the outer pipe (11) is formed so as to extend in a horizontal direction in an installed state.

In this configuration, since the groove (11a) of the outer pipe (11) is formed so as to extend in the horizontal direction in the installed state, the heat medium condensed inside the outer pipe (11) is less likely to flow vertically downward.

A seventh aspect of the invention is intended for an air conditioning system including: a refrigerant circuit (2) including the underground heat exchanger (10) of any one of the first to sixth aspects of the invention, a utilization-side heat exchanger (5), a compression mechanism (3), an expansion mechanism (6), and a flow path switching portion (4) that switches a direction in which a refrigerant as the heat exchange fluid flows, wherein the air conditioning system is configured to be capable of switching between a heating operation and a cooling operation by switching the direction in which the refrigerant flows in the refrigerant circuit (2) by the flow path switching portion (4).

In this configuration, the underground heat exchanger as a heat-source-side heat exchanger can be made to function either as an evaporator or a condenser by switching the flow of the refrigerant as the heat exchange fluid in the refrigerant circuit (2) by the flow path switching portion (4).

### ADVANTAGES OF THE INVENTION

According to the first aspect of the invention, the heat medium (13) can be efficiently evaporated or condensed when the underground heat exchanger is used either as an evaporator or a condenser. That is, according to the present invention, in the underground heat exchanger, the heat exchange fluid can efficiently exchange heat with soil under the ground. Such increased heat exchange efficiency can reduce the size and manufacturing cost of the underground heat exchanger, and can also simplify on-site construction work.

According to the second aspect of the invention, the heat medium (13) can be circulated in the entire length of the outer pipe (11) in the longitudinal direction by the single heat-transfer pipe (12) in the heating and cooling operations. This can increase the heat exchange efficiency, and can reduce the cost of the underground heat exchanger.

According to the third aspect of the invention, the second main body portion (12e) of the heat-transfer pipe (12) is formed in the helical shape. This can further increase the surface area of the heat-transfer pipe (12) that contacts the inner peripheral surface of the outer pipe (11), and thus can further improve the heat exchange efficiency.

According to the fourth aspect of the invention, the condensed heat medium (13) can be effectively guided by the grooves (12f) of the heat-transfer pipe (12) to a portion where heat exchange is to be performed. This can further improve the heat exchange efficiency.

According to the fifth aspect of the invention, the condensed heat medium (13) can be spread in the circumferential direction by the grooves (11a) in the inner peripheral surface of the outer pipe (11). This can further improve the heat exchange efficiency.

According to the sixth aspect of the invention, the heat medium condensed inside the outer pipe (11) is less likely to flow vertically downward. This can further improve the heat exchange efficiency.

According to the seventh aspect of the invention, advantages similar to those of the first to sixth aspects of the invention can be provided in the air conditioning system capable of performing the heating and cooling operations.

### BRIEF DESCRIPTION OF THE DRAWINGS

[FIG. 1] FIG. 1 is a schematic configuration diagram of an air conditioning system including underground heat exchangers according to a first embodiment of the present invention.
[FIG. 2] FIG. 2A is a transverse cross-section showing a schematic configuration of the underground heat exchanger, and FIG. 2B is a longitudinal cross-section showing a schematic configuration of the underground heat exchanger.
[FIG. 3] FIG. 3 is a diagram schematically showing a state in which the underground heat exchanger is installed.
[FIG. 4] FIG. 4 is a partial enlarged perspective view showing a schematic configuration of an outer pipe and a heat-transfer pipe of the underground heat exchanger.
[FIG. 5] FIG. 5 is a partial enlarged cross-sectional view showing a change in phase of carbon dioxide inside the underground heat exchanger in a heating operation.
[FIG. 6] FIG. 6 is a diagram corresponding to FIG. 5, showing a change in phase of carbon dioxide inside the underground heat exchanger in a cooling operation.
[FIG. 7] FIG. 7 is a schematic configuration diagram of an air conditioning system including an underground heat exchanger according to a second embodiment of the present invention.
[FIG. 8] FIG. 8 is a longitudinal cross-section showing the underground heat exchanger of the second embodiment.
[FIG. 9] FIGS. 9A-9B are diagrams illustrating movement of a refrigerant in a cooling operation, where FIG. 9A is a cross-sectional view of the underground heat exchanger, and FIG. 9B is an enlarged view of a heat medium holding portion.
[FIG. 10] FIG. 10 is a longitudinal cross-section showing a configuration of a modification of the underground heat exchanger.
[FIG. 11] FIGS. 11A-11B are diagrams showing other configuration examples of a heat-transfer pipe.
[FIG. 12] FIG. 12 is a diagram showing still another configuration example of the heat-transfer pipe.
[FIG. 13] FIG. 13 is a diagram schematically showing a state in which the underground heat exchanger is installed horizontally.
[FIG. 14] FIGS. 14A-14B are diagrams showing another configuration example of an outer pipe, where FIG. 14A is a transverse cross-section of the outer pipe, and FIG. 14B is a partially cut-away perspective view of the outer pipe.

### DESCRIPTION OF EMBODIMENTS

Embodiments of the present invention will be described in detail below with reference to the accompanying drawings. Note that preferred embodiments set forth below are to be regarded as illustrative in nature, and are not intended to limit the scope, applications, and use of the invention.

### (First Embodiment)

An underground heat exchanger of a first embodiment of the present invention is used in air conditioning systems capable of performing a heating operation and a cooling operation, and is configured to function as an evaporator in the heating operation to recover heat from soil under the ground, and to function as a condenser in the cooling operation to dissipate heat to the soil under the ground.

### (Overall Configuration of Air Conditioning System)

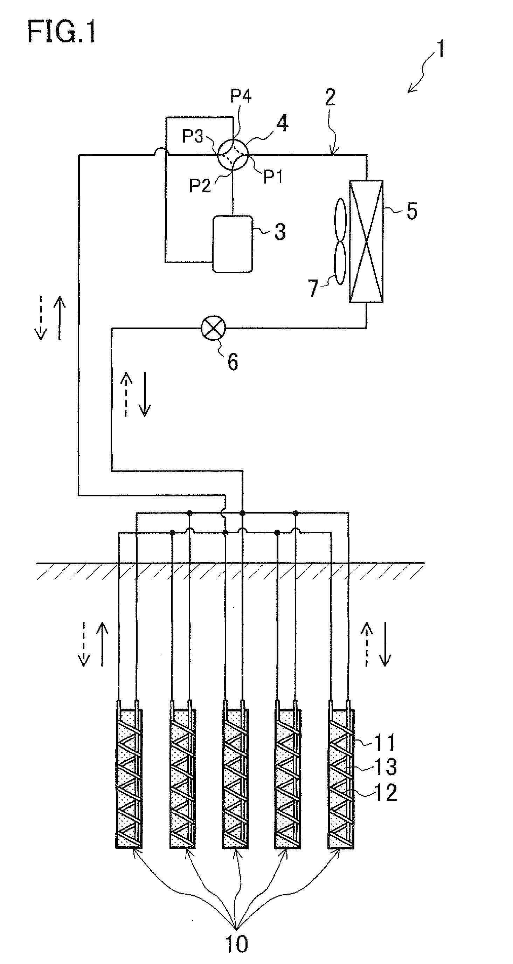

FIG. 1 is a schematic configuration diagram of an air conditioning system (1) including an underground heat exchanger (10) of the first embodiment of the present invention. The air conditioning system (1) includes a compressor (3) (a compression mechanism), a four-way valve (4) (a flow path switching portion), an indoor heat exchanger (5) (a utilization-side heat exchanger), an expansion valve (6) (an expansion mechanism), and a refrigerant circuit (2) that is formed by sequentially connecting via a refrigerant pipe a plurality of underground heat exchangers (10) buried under the ground. A refrigerant (heat exchange fluid) is sealed in the refrigerant circuit (2). As the refrigerant circulates in the refrigerant circuit (2), the indoor heat exchanger (5) serves as a condenser, and the underground heat exchangers (10) serve as an evaporator during the heating operation, whereas the indoor heat exchanger (5) serves as an evaporator, and the underground heat exchangers (10) serve as a condenser during the cooling operation. Thus, a vapor-compression refrigeration cycle is performed. Note that in the present embodiment, the plurality of underground heat exchangers (10) are connected in parallel to the refrigerant circuit (2), so that each underground heat exchanger (10) exchanges heat with soil under the ground.

The compressor (3) is, e.g., a scroll compressor, and is configured to suck the refrigerant through a suction port to compress the refrigerant, and to discharge the compressed refrigerant through a discharge port. In the refrigerant circuit (2), the discharge port of the compressor (3) is connected to a second port (P2) of the four-way valve (4), and the suction port of the compressor (3) is connected to a fourth port (P4) of the four-way valve (4).

A first port (P1) of the four-way valve (4) is connected to the indoor heat exchanger (5), the second port (P2) thereof is connected to the discharge port of the compressor (3), a third port (P3) thereof is connected to the underground heat exchangers (10), and the fourth port (P4) thereof is connected to the suction port of the compressor (3). The four-way valve (4) can be switched between a first state (a state shown by solid line in FIG. 1) in which the first port (P1) communicates with the second port (P2), and the third port (P3) communicates with the fourth port (P4), and a second state (a state shown by broken line in FIG. 1) in which the first port (P1) communicates with the fourth port (P4), and the second port (P2) communicates with the third port (P3).

The indoor heat exchanger (5) is, e.g., a cross-fin type fin-and-tube heat exchanger, and is an air heat exchanger for exchanging heat between a refrigerant and room air. In the air conditioning system (1), the indoor heat exchanger (5) is incorporated into an indoor unit placed in a room to be air conditioned. In the refrigerant circuit (2), one end of the indoor heat exchanger (5) is connected to the expansion valve (6), and the other end thereof is connected to the first port (P1) of the four-way valve (4). An indoor fan (7) for sending air heat-exchanged with the indoor heat exchanger (5) to a room is provided near the indoor heat exchanger (5).

The expansion valve (6) is formed by an electronic expansion valve whose opening is variable. By varying the opening of the expansion valve (6), the refrigerant introduced from the indoor heat exchanger (5) or the underground heat exchangers (10) to the expansion valve (6) can be expanded, and the pressure of the refrigerant can be reduced to a predetermined pressure.

Each underground heat exchanger (10) has a substantially cylindrical outer shape, and is buried under the ground so as to extend in the longitudinal direction (the vertical direction) so that heat exchange is performed between the refrigerant flowing inside the underground heat exchanger (10) and the soil. As described in detail later, the underground heat exchanger (10) has an outer pipe (11) having a bottomed cylindrical shape, a heat-transfer pipe (12) which is contained in the outer pipe (11) and in which the refrigerant flows, and a heat medium (13) that is sealed in the outer pipe (11). The underground heat exchanger (10) is configured to exchange heat between the refrigerant flowing inside the heat-transfer pipe (12) and the soil located outside the outer pipe (11) via the heat medium (13).

The air conditioning system (1) having the above configuration performs the heating operation when the four-way valve (4) is in the first state, and performs the cooling operation when the four-way valve (4) is in the second state. That is, in the heating operation, a vapor-compression refrigeration cycle in which the underground heat exchangers (10) function as an evaporator and the indoor heat exchanger (5) functions as a condenser is performed in the refrigerant circuit (2). Meanwhile, in the cooling operation, a vapor-compression refrigeration cycle in which the underground heat exchangers (10) function as a condenser and the indoor heat exchanger (5) functions as an evaporator is performed in the refrigerant circuit (2).

### (Configuration of Underground Heat Exchanger)

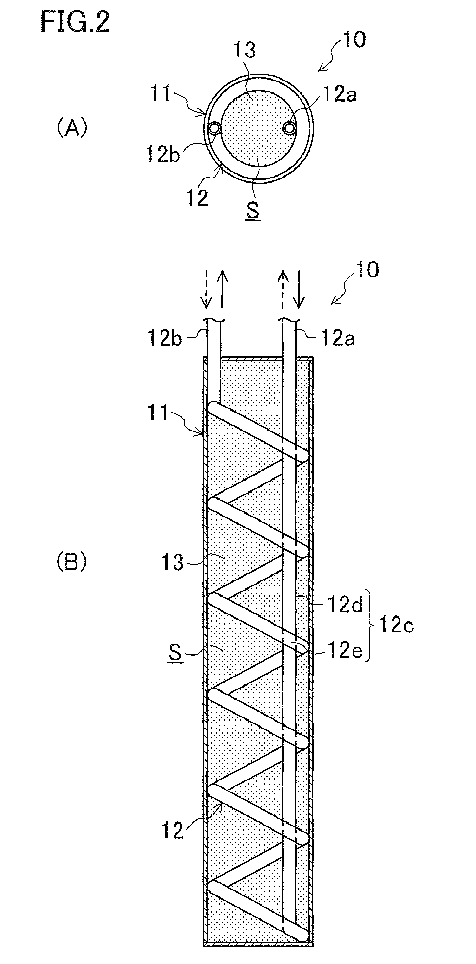

The configuration of the underground heat exchanger (10) will be described in detail below with reference to FIGS. 2A-2B. FIG. 2A is a transverse cross-section showing a schematic configuration of the underground heat exchanger (10), and FIG. 2B is a longitudinal cross-section showing a schematic configuration of the underground heat exchanger (10)

As described above, the underground heat exchanger (10) includes the outer pipe (11), the heat-transfer pipe (12) that is contained in the outer pipe (11), and the heat medium (13) that is sealed in the outer pipe (11).

The outer pipe (11) is a metal cylindrical member whose both ends are closed by metal plate members, and a space (S) is formed inside the outer pipe (11). The outer pipe (11) has a sealed structure capable of sealing in the space (S) a predetermined amount of carbon dioxide (CO₂) as the heat medium (13). The heat-transfer pipe (12) in which the refrigerant flows is contained in the space (S) of the outer pipe (11). This heat-transfer pipe (12) extends through the plate member that forms one end face (the end face located on the ground surface side) of the outer pipe (11), and is connected to a refrigerant pipe of the refrigerant circuit (2). The outer pipe (11) is longitudinally buried under the ground so that the axial direction of the cylindrical outer pipe (11) substantially matches the vertical direction. Note that although it is ideal to bury the outer pipe (11) substantially in the vertical direction under the ground, a certain amount of tilting of the outer pipe (11) is allowed.

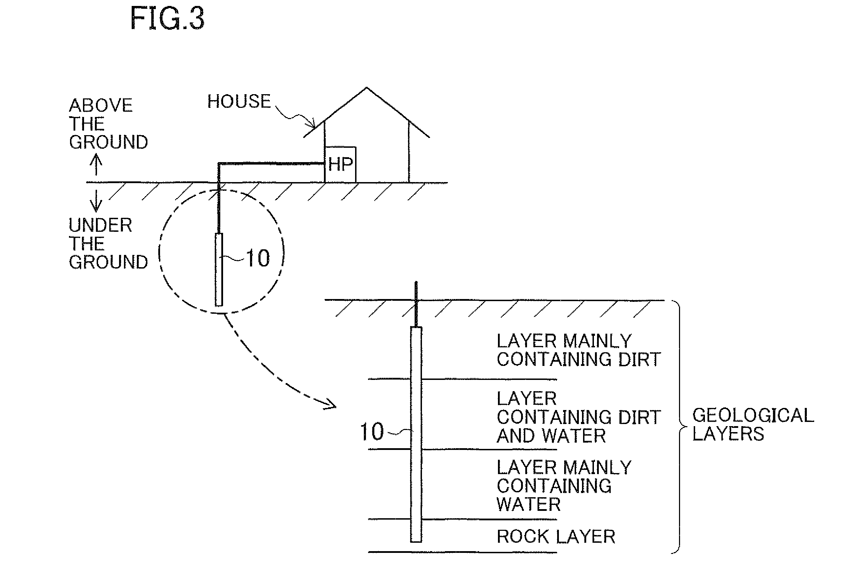

For example, FIG. 3 is a diagram schematically showing a state in which the underground heat exchanger (10) is installed under the ground. Only one underground heat exchanger (10) is shown in the figure for convenience of description. Geological layers include a layer mainly containing only dirt, a layer containing dirt and water, a layer mainly containing water, a rock layer in which rocks are successively distributed, etc. The underground heat exchanger (10) may be installed in any of the geological layers. FIG. 3 shows the state in which the underground heat exchanger (10) is installed so as to cross these layers. However, for example, the underground heat exchanger (10) may be installed so as to perform heat exchange only in any of the geographical layers. Note that "HP" in FIG. 3 represents a main body portion (a portion other than the underground heat exchanger (10)) of the air conditioning system (1) (the same applies to the following description).

The heat-transfer pipe (12) is made of copper, and is formed by a pipe-shaped member in which the refrigerant flows, so as to form a part of a flow path of the refrigerant circuit (2). In the present embodiment, the heat-transfer pipe (12) is formed so as to extend from the top to the bottom of the outer pipe (11), and to be bent at the bottom to return to the top. The heat-transfer pipe (12) is contained in the outer pipe (11) so that both ends of the heat-transfer pipe (12) extend through the plate member that forms the one end face of the outer pipe (11) and protrude to the outside if the outer pipe (11). Specifically, the heat-transfer pipe (12) includes a first connection portion (12a) having its one end connecting to the expansion valve (6), a main body portion (12c) connected to the other end of the first connection portion (12a), and a second connection portion (12b) having its one end connected to the main body portion (12c) and the other end connecting to the third port (P3) of the four-way valve (4). These connection portions (12a, 12b) are provided so as to extend through the plate member that forms the one end face (the end face located on the ground surface side) of the outer pipe (11), whereas the main body portion (12c) is placed so as to extend along the inner surface of the outer pipe (11).

The main body portion (12c) is formed by a linear first main body portion (12d) connected to the other end of the first connection portion (12a) and extending to the bottom of the outer pipe (11), and a helical second main body portion (12e) connected to the first main body portion (12d) and extending to the top of the outer pipe (11). Forming the second main body portion (12e) in a helical shape can increase the surface area of a portion where the refrigerant flowing in the second main body portion (12e) exchanges heat with carbon dioxide (13) sealed in the outer pipe (11), whereby heat exchange can be efficiently performed between the refrigerant and the heat medium (13) (carbon dioxide).

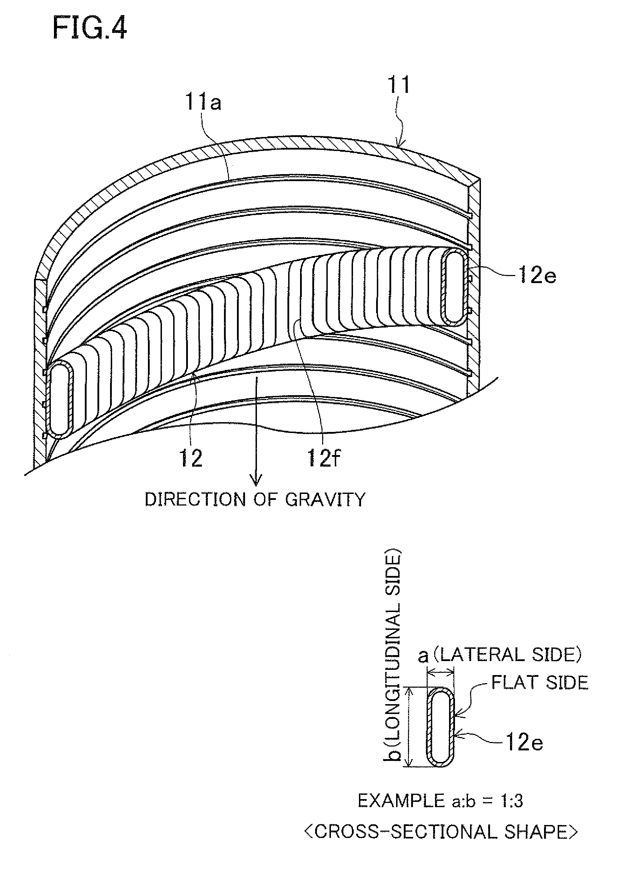

As shown in FIG. 4, the second main body portion (12e) is formed by a flat pipe. In this example, a cross section of the second main body portion (12e), perpendicular to a flow path direction, has an aspect ratio of 1 : 3 to 1 : 2 (FIG. 4 shows an example in which the aspect ratio is 1 : 3). The second main body portion (12e) is placed so that its flat side (i.e., one of longitudinal and lateral sides which has a larger dimension) contacts the inner peripheral surface of the outer pipe (11). This second main body portion (12e) is an example of a flat body of the present invention.

Since the second main body portion (12e) thus contacts the inner peripheral surface of the outer pipe (11), the carbon dioxide (13) condensed on the outer peripheral surface of the second main body portion (12e) or the inner peripheral surface of the outer pipe (11) can move to the inner peripheral surface of the outer pipe (11) or the outer peripheral surface of the second main body portion (12e), and the carbon dioxide (13) can evaporate on these surfaces, as described below. The first main body portion (12d) is placed inside the helical second main body portion (12e) so as to contact the second main body portion (12e).

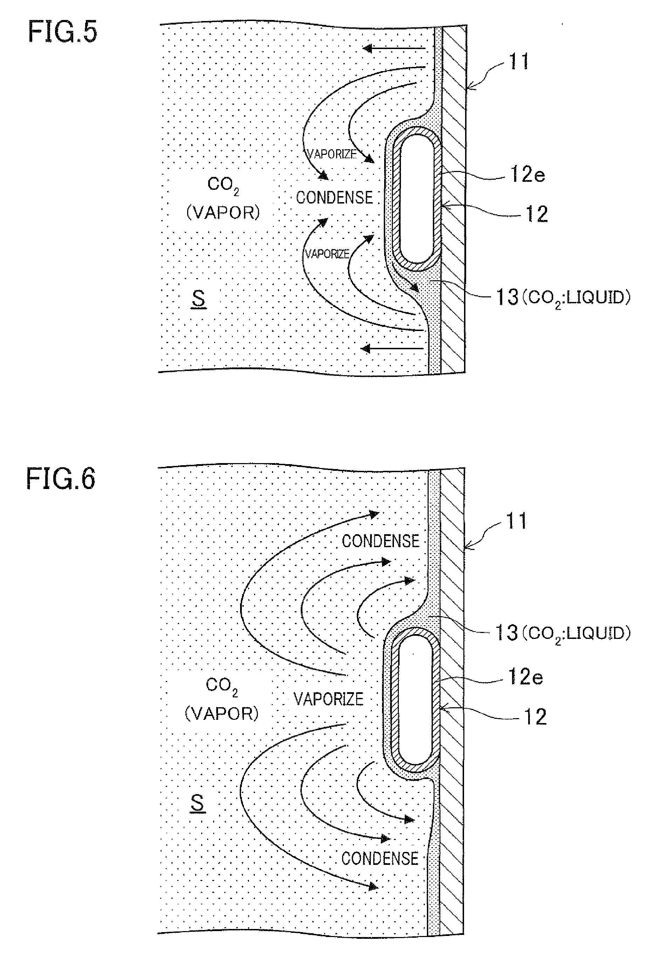

That is, as shown in FIG. 5, in the heating operation of the air conditioning system (1), a low-pressure refrigerant having a saturation temperature lower than the temperature of the soil under the ground flows in the heat-transfer pipe (12) of the underground heat exchanger (10). Thus, the carbon dioxide (13) in the outer pipe (11) having a saturation temperature lower than the temperature of the soil and higher than the temperature of the low-pressure refrigerant is condensed on the outer surface of the heat-transfer pipe (12). At this time, the refrigerant flowing in the second main body portion (12e) of the heat-transfer pipe (12) is evaporated by condensation heat of the carbon dioxide (13), and is sucked through the suction port of the compressor (3).

As described above, since the second main body portion (12e) is in contact with the inner peripheral surface of the outer pipe (11), the condensed carbon dioxide (13) moves from the outer peripheral surface of the second main body portion (12e) to the inner peripheral surface of the outer pipe (11), and is evaporated (vaporized) on the inner peripheral surface by heat of the soil under the ground. The carbon dioxide (13) thus vaporized is recondensed when cooled by the second main body portion (12e) of the heat-transfer pipe (12).

On the other hand, as shown in FIG. 6, in the cooling operation of the air conditioning system (1), a high-pressure refrigerant having a saturation temperature higher than the temperature of the soil under the ground flows in the heat-transfer pipe (12) of the underground heat exchanger (10). Since the carbon dioxide (13) in the outer pipe (11) has a saturation temperature higher than the temperature of the soil and lower than the temperature of the high-pressure refrigerant, the carbon dioxide (13) is vaporized on the outer surface of the heat-transfer pipe (12), and is condensed on the inner peripheral surface of the outer pipe (11).

That is, as described above, since the second main body portion (12e) is in contact with the inner peripheral surface of the outer pipe (11), the carbon dioxide (13) condensed on the inner peripheral surface of the outer pipe (11) moves to the outer peripheral surface of the second main body portion (12e), and is vaporized on the outer peripheral surface by heat of the refrigerant. The carbon dioxide (13) thus vaporized is recondensed when cooled by the inner peripheral surface of the outer pipe (11). When the carbon dioxide (13) is vaporized on the outer surface of the second main body portion (12e) of the heat-transfer pipe (12), the refrigerant flowing in the second main body portion (12e) is condensed as the heat is removed by evaporation of the carbon dioxide (13), and flows into the expansion valve (6).

In the underground heat exchanger (10), the second main body portion (12e) of the heat-transfer pipe (12) is formed in a flat shape as described above. Thus, the carbon dioxide (13) condensed on the outer peripheral surface of the second main body portion (12e) is less likely to scatter or fall during the heating operation. That is, the carbon dioxide (13) (the heat medium) can efficiently obtain heat from the refrigerant inside the heat-transfer pipe (12) on the second main body portion (12e).

Forming the second main body portion (12e) in the flat shape can also reduce the size of a refrigerant accumulating portion that is formed between the second main body portion (12e) and the inner peripheral surface of the outer pipe (11). Thus, in the cooling operation, the carbon dioxide (13) condensed on the inner peripheral surface of the outer pipe (11) can be effectively guided to the second main body portion (12e).

Forming the heat-transfer pipe (12) in the helical shape can further increase the surface area of the heat-transfer pipe (12) in the outer pipe (11). Forming the heat transfer pipe (12) in the helical shape also enables the carbon dioxide (the heat medium) to be reliably in contact with the heat-transfer pipe (12) even if the angle of the underground heat exchanger (10) with respect to the ground surface is shifted from 90 degrees. Efficient heat exchange can be implemented in these respects as well.

Moreover, in the present embodiment, the heat-transfer pipe (12) is formed so as extend from the top of the outer pipe (11), and to be bent at the bottom of the outer pipe (11) to return to the top. Thus, the heat medium (13) can be efficiently circulated in the entire length of the outer pipe (11) in the longitudinal direction by the single heat-transfer pipe (12) in the heating and cooling operations.

In the present embodiment, as shown in FIG. 4, a plurality of grooves (11a) extending horizontally in a circumferential direction of the outer pipe (11) are formed in the inner peripheral surface of the outer pipe (11) so as to be arranged in the longitudinal direction.

A plurality of grooves (12f) are also formed in the outer peripheral surface of the second main body portion (12e). As shown in FIG. 4, each groove (12f) of the second main body portion (12e) is formed so as to extend in the circumferential direction of the second main body portion (12e), and to extend in the longitudinal direction of the outer pipe (11) in the state in which the heat-transfer pipe (12) is inserted in the outer pipe (11). Since the outer pipe (11) is buried under the ground so that the longitudinal direction of the outer pipe (11) matches the vertical direction, the grooves (12f) of the second main body (12e) also extend in the vertical direction. That is, these grooves (12f) extend in the direction of gravity in the state in which the underground heat exchanger (10) is installed.

Providing the grooves (12f) in the second main body portion (12e) in this manner enables the carbon dioxide (13) condensed on the outer peripheral surface of the second main body portion (12e) to be guided to the inner peripheral surface of the outer pipe (11) by the surface tension and the pressure difference in a liquid film in the grooves (12f) in the heating operation. Providing the grooves (12f) in the second main body portion (12e) also enables the carbon dioxide (13) condensed on the inner peripheral surface of the outer pipe (11) to be more effectively guided to the outer peripheral surface of the second main body portion (12e) by the grooves (12f) in the cooling operation. Moreover, the condensed carbon dioxide (13) can be spread in the circumferential direction (the horizontal direction) by the grooves (11a) in the inner peripheral surface of the outer pipe (11) (see FIGS. 5-6), whereby heat exchange can be efficiently performed between the refrigerant and soil and the carbon dioxide (13).

Note that in the present embodiment, the grooves (11a) formed in the inner peripheral surface of the outer pipe (11) need not necessarily extend in the horizontal direction, but may be, e.g., tilted.

Displacement of the direction of the grooves (12f) of the heat-transfer pipe (12) from the direction of gravity can also be allowed. Although it is ideal for the grooves (12f) of the heat transfer pipe (12) to extend in the direction of gravity, the grooves (12f) may extend in any direction as long as they can guide the condensed heat medium to the lower side of the underground heat exchanger (10) in the state in which the heat exchanger (10) is installed.

### [Operation]

Operation of the air conditioning system (1) having the above configuration will be described below with reference to FIGS. 1, 5, and 6.

### (Heating Operation)

As shown in FIG. 1, when starting the heating operation, the four-way valve (4) is first switched to the first state. When the compressor (3) comes into operation, the compressed high-pressure refrigerant (gaseous refrigerant) is discharged through the discharge port of the compressor (3), and flows into the indoor heat exchanger (5) through the four-way valve (4). In the indoor heat exchanger (5), the high-pressure refrigerant is condensed as it dissipates heat into the room air. The room air is heated by the condensation heat, whereby the room is heated. The refrigerant condensed in the indoor heat exchanger (5) flows out of the indoor heat exchanger (5), is reduced in pressure by the expansion valve (6), and is introduced into the underground heat exchangers (10) (shown by solid arrow in FIG. 1). Note that in the expansion valve (6), the refrigerant is reduced in pressure so as to have a saturation temperature lower than the temperature of the soil under the ground.

The low-pressure refrigerant flowing into the underground heat exchangers (10) evaporates as it absorbs heat under the ground via the carbon dioxide (13) in the outer pipe (11). The evaporated refrigerant flows out of the underground heat exchangers (10), and is sucked again into the compressor (3) through the four-way valve (4). Then, the refrigerant is compressed to a predetermined pressure and discharged.

In this manner, the refrigerant circulates in the refrigerant circuit (2), and a vapor-compression refrigeration cycle is performed, whereby the room is heated.

A change in state of the refrigerant and the carbon dioxide (13) in the underground heat exchanger (10) will be described below.

As described above, when the low-pressure refrigerant having a saturation temperature lower than the temperature of the soil under the ground flows into the main body portion (12c) of the heat-transfer pipe (12) in the underground heat exchanger (10), the carbon dioxide (13) sealed in the outer pipe (11) of the underground heat exchanger (10) and having a saturation temperature higher than the temperature of the refrigerant is condensed on the main body portion (12c) of the heat-transfer pipe (12), as shown in FIG. 5. The refrigerant in the heat-transfer pipe (12) is evaporated by the condensation heat of the carbon dioxide (13), flows out of the underground heat exchanger (10), and then is sucked into the compressor (3).

Meanwhile, in the outer pipe (11) of the underground heat exchanger (10), the condensed carbon dioxide (13) moves along the outer peripheral surface of the helical second main body portion (12e) of the heat-transfer pipe (12) in the horizontal direction to the inner peripheral surface of the outer pipe (11) that is in contact with the second main body portion (12e). The carbon dioxide (13) is vaporized on the inner peripheral surface of the outer pipe (11) by the heat of the soil under the ground, and the vaporized carbon dioxide (13) is recondensed by the refrigerant flowing in the second main body portion (12e) of the heat-transfer pipe (12).

### (Cooling Operation)

When starting the cooling operation, the four-way valve (4) is first switched to the second state. When the compressor (3) comes into operation, the compressed high-pressure refrigerant is discharged through the discharge port of the compressor (3), and flows into the underground heat exchangers (10) through the four-way valve (4) (shown by broken arrow in FIG. 1). The high-pressure refrigerant flowing into the underground heat exchangers (10) is condensed as it dissipates heat into the soil under the ground via the carbon dioxide (13) in the outer pipe (11). The condensed refrigerant flows out of the underground heat exchangers (10), is reduced in pressure by the expansion valve (6), and is introduced into the indoor heat exchanger (5). Note that in the expansion valve (6), the refrigerant is reduced in pressure so as to have a saturation temperature lower than the indoor temperature.

The low-pressure refrigerant flowing into the indoor heat exchanger (5) evaporates as it absorbs heat of the room air. The evaporated refrigerant flows out of the indoor heat exchanger (5), and is sucked again into the compressor (3) through the four-way valve (4). Then, the refrigerant is compressed to a predetermined pressure and discharged.

In this manner, the refrigerant circulates in the refrigerant circuit (2), and a vapor-compression refrigeration cycle is performed, whereby the room is cooled.

A change in state of the refrigerant and the carbon dioxide (13) in the underground heat exchanger (10) will be described below.

As shown in FIG. 6, in the cooling operation described above, the carbon dioxide (13), which is sealed in the outer pipe (11) of the underground heat exchanger (10) and has a saturation temperature lower than the temperature of the refrigerant and higher than the temperature of the soil under the ground, is condensed on the inner peripheral surface of the outer pipe (11) by geothermal heat. The condensed carbon dioxide (13) moves along the inner peripheral surface of the outer pipe (11) in the horizontal direction to the outer peripheral surface of the second main body portion (12e) of the heat-transfer pipe (12), which is in contact with the inner peripheral surface of the outer pipe (11). Since the high-pressure refrigerant having a temperature higher than the saturation temperature of the carbon dioxide (13) flows in the heat-transfer pipe (12), the carbon dioxide (13) is vaporized on the outer peripheral surface of the second main body portion (12e) of the heat-transfer pipe (12). At this time, the refrigerant in the heat-transfer pipe (12) is condensed as the heat of the refrigerant is removed by the carbon dioxide (13), and the condensed refrigerant flows out of the underground heat exchanger (10) into the expansion valve (6).

Meanwhile, the carbon dioxide (13) evaporated on the outer peripheral surface of the second main body portion (12e) of the heat-transfer pipe (12) is recondensed on the inner peripheral surface of the outer pipe (11).

### (Advantages of Embodiment)

As described above, in the underground heat exchanger (10) of the present embodiment, the second main body portion (12e) of the heat-transfer pipe (12) has a flat shape. Thus, the carbon dioxide (13) condensed on the outer peripheral surface of the second main body portion (12e) is less likely to scatter or fall in the heating operation. Forming the second main body portion (12e) in the flat shape can also reduce the size of the refrigerant accumulating portion formed between the second main body portion (12e) and the inner peripheral surface of the outer pipe (11). Thus, in the cooling operation, the carbon dioxide (13) condensed on the inner peripheral surface of the outer pipe (11) can be effectively guided to the second main body portion (12e). Moreover, since the second connection portion (12b) is formed in a flat shape, a larger contact area with the outer pipe (11) can be ensured, whereby direct heat transfer efficiency is further increased. Since the heat-transfer pipe (12) is formed in a helical shape, the surface area of the heat-transfer pipe (12) in the outer pipe (11) can further be increased. Forming the heat-transfer pipe (12) in the helical shape enables the carbon dioxide (the heat medium) to reliably contact the heat-transfer pipe (12) even if the angle of the underground heat exchanger (10) with respect to the ground surface is shifted from 90 degrees. Efficient heat exchange can be implemented in these respects as well.

In the present embodiment, heat exchange efficiency can further be improved by the grooves (11a, 12f) provided in the heat-transfer pipe (12) and the outer pipe (11) as described above.

As described above, according to the present embodiment, the heat exchange fluid can efficiently exchange heat with the soil under the ground, in the underground heat exchanger in which the heat-transfer pipe having the heat exchange fluid flowing therein is inserted into the outer pipe, and the heat medium is sealed in the outer pipe. Such increased heat exchange efficiency can reduce the size and the manufacturing cost of the underground heat exchanger, and can simplify the on-site construction work.

### (Modification of First Embodiment)

The first embodiment may be configured as described below.

In the above embodiment, only the second main body portion (12e) of the heat-transfer pipe (12) is formed in the helical shape, and the grooves (12f) are formed in the outer surface of the second main body portion (12c). However, the present invention is not limited to this, and the first main body portion (12d) may also be formed in a helical shape, and grooves may be formed in the outer peripheral surface of the first main body portions (12d). Note that in this case, the first main body portion (12d) having the helical shape is also placed so as to contact the inner peripheral surface of the outer pipe (11). Alternatively, a part of the first main body portion (12d) and a part of the second main body portion (12e) may be formed in a helical shape.

The heat-transfer pipe (12) other than the part having the helical shape may contact the inner peripheral surface of the outer pipe (11), and grooves may be formed in the outer peripheral surface of the heat-transfer pipe (12) that contacts the inner peripheral surface of the outer pipe (11).

In the present embodiment, the second main body portion (12e) of the heat-transfer pipe (12) is formed in the helical shape. However, the present invention is not limited to this, and the second main body portion (12e) may have any shape as long as pressure loss between the inlet and outlet sides of the heat-transfer pipe (12) does not affect the heat exchange efficiency.

In the above embodiment, the underground heat exchange (10) is formed by containing the single heat-transfer pipe (12) in the single outer pipe (11). However, the present invention is not limited to this. The outer pipe may be divided into a plurality of parts in the longitudinal direction, the heat-transfer pipe may be divided into a plurality of parts accordingly, and the plurality of parts of the outer pipe and the plurality of parts of the heat-transfer pipe may be combined. Although the plurality of underground heat exchangers (10) are connected in parallel in the above embodiment, the present invention is not limited to this, and some or all of the plurality of underground heat exchangers (10) may be connected in series.

In the present embodiment, the heat-transfer pipe (12) that is inserted in the outer pipe (11) is made of copper. However, the present invention is not limited to this, and the heat-transfer pipe (12) may be made of any material having high thermal conductivity and high corrosion resistance, such as aluminum, an aluminum alloy, iron, a composite material, etc.

The above embodiment is configured to use the four-way valve (4) to switch the direction in which the refrigerant flows in the refrigerant circuit (2) in the air conditioning system (1). However, the present invention is not limited to this, and the present invention may have any configuration capable of switching the direction in which the refrigerant flows.

### (Second Embodiment)

Another configuration example of the underground heat exchanger will be described in a second embodiment.

### (Overall Configuration of Air Conditioning System)

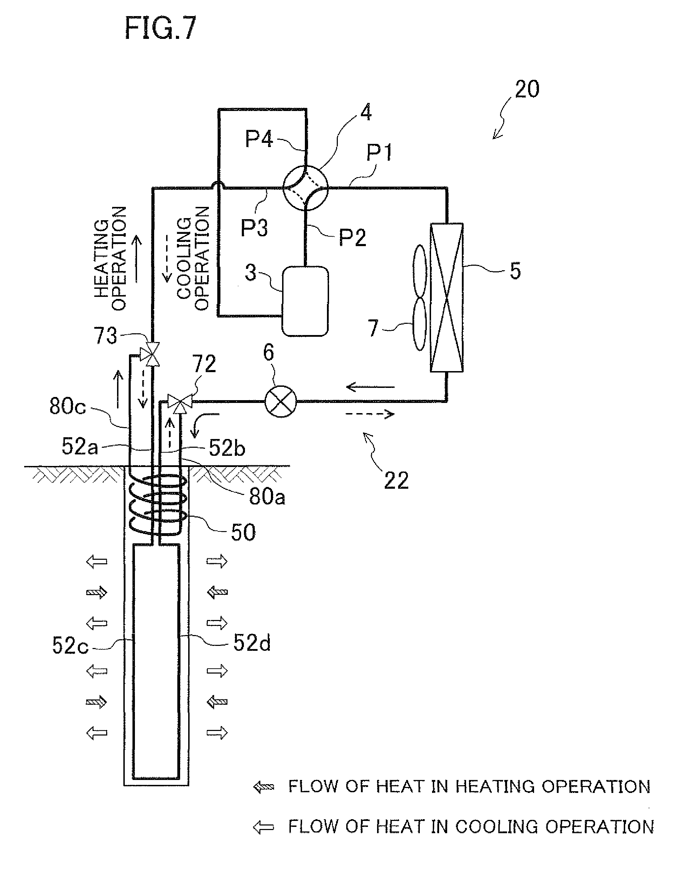

FIG. 7 is a system diagram of an air conditioning system (20) including an underground heat exchanger (50) according to the second embodiment of the present invention. As shown in the figure, the air conditioning system (20) includes a refrigerant circuit (22).

The refrigerant circuit (22) includes a compressor (3), an indoor heat exchanger (5), an expansion valve (6), an underground heat exchanger (50), a four-way valve (4), a first switch valve (72), and a second switch valve (73). This refrigerant circuit (22) is filled with a refrigerant (heat exchange fluid). Of these components, the compressor (3), the indoor heat exchanger (5), the expansion valve (6), and the four-way valve (4) have similar configurations to the first embodiment. In the refrigerant circuit (22), one end of the indoor heat exchanger (5) is connected to the expansion valve (6), and the other end thereof is connected to a first port (P1) (described later) of the four-way valve (4). One end of the expansion valve (6) is connected to the first switch valve (72), and the other end thereof is connected to the indoor heat exchanger (5). A second port (P2) of the four-way valve (4) is connected to a discharge port of the compressor (3), and a fourth port (P4) thereof is connected to a suction port of the compressor (3). A third port (P3) thereof is connected to the second switch valve (73).

### (Configuration of Underground Heat Exchanger (50))

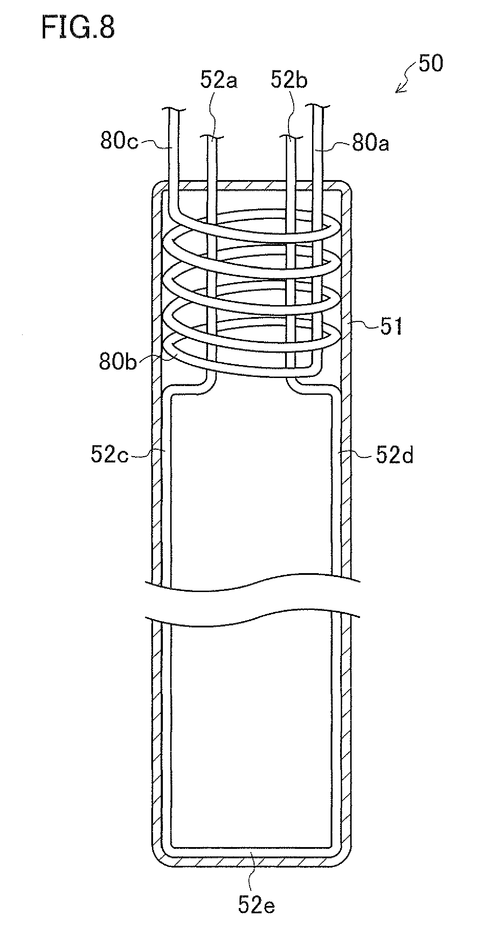

The configuration of the underground heat exchanger (50) will be described in detail below. The underground heat exchanger (50) is buried under the ground, and performs heat exchange with soil during cooling and heating operations. Specifically, the underground heat exchanger (50) functions as a condenser in the cooling operation to dissipate heat to the soil, and functions as an evaporator in the heating operation to absorb heat from the soil. FIG. 8 is a longitudinal cross-section showing the underground heat exchanger (50) of the present embodiment. As shown in FIG. 8, the underground heat exchanger (50) includes an outer pipe (51), a cooling heat-transfer pipe (52), and a heating heat-transfer pipe (80). The outer pipe (51) has a configuration similar to the first embodiment, and a heat medium (13) is sealed in the outer pipe (51).

### Cooling Heat-Transfer Pipe (52)

The cooling heat-transfer pipe (52) is inserted in the outer pipe (51), and is placed below the heating heat-transfer pipe (80). In the cooling operation, a refrigerant is introduced into the cooling heat-transfer pipe (52), and heat is dissipated from the refrigerant.

The cooling heat-transfer pipe (52) of the present embodiment is formed in a pipe shape. Specifically, as shown in FIG. 8, the cooling heat-transfer pipe (52) is formed by an inlet portion (52a), an outlet portion (52b), an inlet-side main body portion (52c), an outlet-side main body portion (52d), and a connection portion (52e). For example, copper, aluminum, an aluminum alloy, or other composite material may be used as a material of the cooling heat-transfer pipe (52). However, the material of the cooling heat-transfer pipe (52) needs to be selected so as to have appropriate thermal conductivity and corrosion resistance according to the conditions of use.

The inlet portion (52a) is inserted into the outer pipe (51) from the upper side of the outer pipe (51) (the ground surface side in the state in which the outer pipe (51) is buried), and one end of the inlet portion (52a) is connected to the second switch valve (73). The other end of the inlet portion (52a) is connected to one end of the inlet-side main body portion (52c) in an upper part of the outer pipe (51). The outlet portion (52b) is inserted into the outer pipe (51) from the upper side of the outer pipe (51), and one end of the outlet portion (52b) located outside the outer pipe (51) is connected to the first switch valve (72). The other end of the outlet portion (52b) is connected to one end of the outlet-side main body portion (52d) in the upper part of the outer pipe (51).

Both of the inlet-side main body portion (52c) and the outlet-side main body portion (52d) extend from the upper part to the bottom (the lower end) of the outer pipe (51) along the inner wall surface of the outer pipe (51). The connection portion (52e) extend on the bottom of the outer pipe (51) so as to radially cross the bottom of the outer pipe (51), and connects one end of the inlet-side main body portion (52c) with one end of the outlet-side main body portion (52d) at the bottom of the outer pipe (51). That is, in the refrigerant circuit (22), one end of the cooling heat-transfer pipe (52) is connected to the first switch valve (72), and the other end thereof is connected to the second switch valve (73).

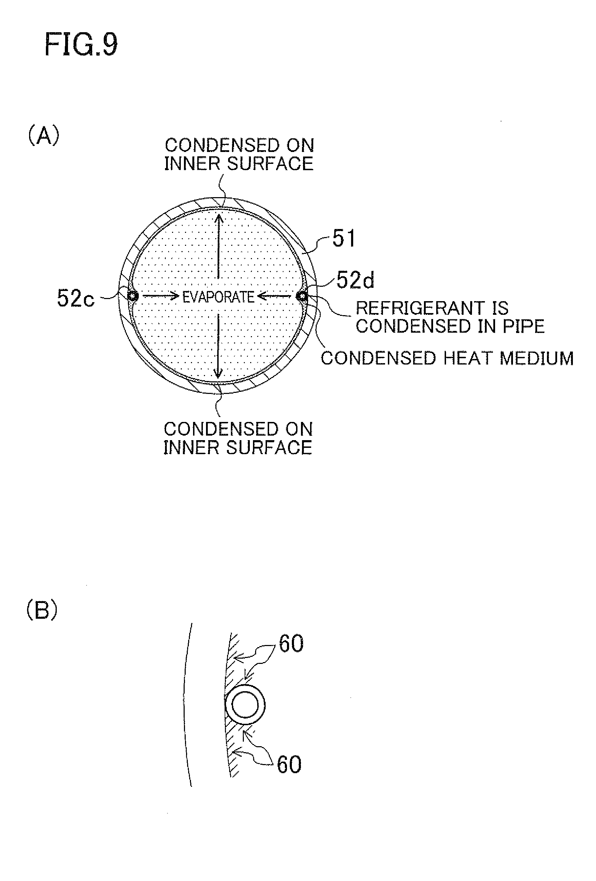

In the present embodiment, the outer wall surface of the inlet-side main body portion (52c) and the inner wall surface of the outer pipe (51) form a heat medium holding portion (60) that holds a liquid heat medium by surface tension. Similarly, the outer wall surface of the outlet-side main body portion (52d) and the inner wall surface of the outer pipe (51) also form a heat medium holding section (60). Specifically, each main body portion (52c, 52d) is placed so that the outer wall surface of the main body portion (52c, 52d) contacts the inner wall surface of the outer pipe (51). As shown in FIGS. 9A-9B, the liquid heat medium adhering to the inner wall surface of the outer pipe (51) is held between these wall surfaces (e.g., between the outer wall surface of the inlet-side main body portion (52c) and the inner wall surface of the outer pipe (51)) by the surface tension. The outer wall surface of each main body portion (52c, 52d) does not necessarily contact the inner wall surface of the outer pipe (51) as long as the liquid heat medium can be held by the surface tension as described above. However, in the present embodiment, each main body portion (52c, 52d) is placed so that the outer wall surface thereof contacts the inner wall surface of the outer pipe (51).

Since each main body portion (52c, 52d) is placed so that the outer wall surface thereof contacts the inner wall surface of the outer pipe (51) as described above, each main body portion (52c, 52d) can directly exchange heat with the outer pipe (51). That is, such direct heat exchange further improves heat exchange capability of the underground heat exchanger (50). Note that in the cooling heat-transfer pipe (52), heat exchange is performed by the two main body portions (52c, 52d). However, the number of main body portions (52c, 52d) is shown by way of example only, and the present invention is not limited to this example. For example, three or more main body portions may be provided.

There may be a predetermined gap between each main body portion (52c, 52d) and the inner wall surface of the outer pipe (51). The heat medium holding portion (60) need not necessarily be provided as long as each main body portion (52c, 52d) can be moistened with the liquid heat medium.

### Heating Heat-Transfer Pipe (80)

The heating heat-transfer pipe (80) is inserted into the outer pipe (51). In the heating operation, a refrigerant is introduced into the heating heat-transfer pipe (80), and the heating heat-transfer pipe (80) evaporates the refrigerant. In this example, the heating heat-transfer pipe (80) is forked by an inlet portion (80a), a main body portion (80b), and an outlet portion (80c). For example, copper, aluminum, an aluminum alloy, or other composite material can be used as a material of the heating heat-transfer pipe (80). However, the material of the heating heat-transfer pipe (80) needs to be selected so as to have appropriate thermal conductivity and corrosion resistance according to the conditions of use.

In the heating operation, the refrigerant is introduced into the main body portion (80b), and the main body portion (80b) absorbs heat from the heat medium to evaporate the refrigerant introduced therein. In the present embodiment, the main body portion (80b) is formed in a helical shape, and is placed in an upper part of the outer pipe (51) so as to surround the inlet portion (52a) and the outlet portion (52b) of the cooling heat-transfer pipe (52). That is, the main body portion (80b) is placed above the cooling heat-transfer pipe (52) in the state in which the outer pipe (51) is buried. Like the second main body portion (12e) of the first embodiment, the main body portion (80b) is formed by a flat pipe. In this example, a cross section of the main body portion (80b) has an aspect ratio of 1 : 3 to 1 : 2. A flat side (one of longitudinal and lateral sides which has a larger dimension) of the main body portion (80b) contacts the inner peripheral surface of the outer pipe (51). This main body portion (80b) is an example of the flat body of the present invention.

Like the grooves (12f) of the heat-transfer pipe (12), a plurality of grooves (not shown) are also formed in the outer peripheral surface of the main body portion (80b). The grooves of the main body portion (80b) are formed so as to extend in the circumferential direction of the main body portion (80b), and to extend in the longitudinal direction of the outer pipe (51) in the state in which the heating heat-transfer pipe (80) is inserted in the outer pipe (51). Since the outer pipe (51) is buried under the ground so that the longitudinal direction thereof matches the vertical direction, the grooves of the main body portions (80b) also extend in the vertical direction, that is, the direction of gravity in the state in which the underground heat exchanger (50) is installed.

The inlet portion (80a) is a pipe for introducing the refrigerant into the main body portion (80b), and the outlet portion (80c) is a pipe for discharging the refrigerant from the main body portion (80b). In the present embodiment, both of the inlet portion (80a) and the outlet portion (80c) are formed in a linear shape, and are inserted into the outer pipe (51) from the upper side of the outer pipe (51).

### First and Second Switch Valves (72, 73)

The first and second switch valves (72, 73) are valves that switch the flow of the refrigerant according to whether the heating operation or the cooling operation is to be performed. The first and second switch valves (72, 73) are an example of a switching portion of the present invention. In the present embodiment, the first switch valve (72) connects the expansion valve (6) to the outlet portion (52b) of the cooling heat-transfer pipe (52) or the inlet portion (80a) of the heating heat-transfer pipe (80). The second switch valve (73) connects the third port (P3) of the four-way valve (4) to the inlet portion (52a) of the cooling heat-transfer pipe (52) or the outlet portion (80c) of the heating heat-transfer pipe (80).

### [Operation]

Operation in the air conditioning system (20) will be described below.

### (Heating Operation)

First, the heating operation of the air conditioning system (20) will be described. In the heating operation, the four-way valve (4) is switched to the first state. That is, the first port (P1) communicates with the second port (P2), whereas the third port (P3) communicates with the fourth port (P4) (the state shown by solid line in FIG. 7). The first switch valve (72) is switched so that the expansion valve (6) is connected to the inlet portion (80a) of the heating heat-transfer pipe (80). The second switch valve (73) is switched so that the outlet portion (80c) of the heating heat-transfer pipe (80) is connected to the third port (P3) of the four-way valve (4).

When the compressor (3) comes into operation, the compressor (3) discharges the compressed refrigerant (gaseous refrigerant) through the discharge port. The refrigerant thus discharged from the compressor (3) is sent to the indoor heat exchanger (5) through the four-way valve (4). The refrigerant flowing into the indoor heat exchanger (5) dissipates heat into room air in the indoor heat exchanger (5). The room air is heated in the indoor heat exchanger (5), and the heated room air is returned into the room by an indoor fan (7).

The refrigerant that has dissipated the heat in the indoor heat exchanger (5) is sent to the expansion valve (6). The expansion valve (6) reduces the pressure of the refrigerant flowing therein. The refrigerant thus reduced in pressure is introduced into the inlet portion (80a) through the first switch valve (72), and is further introduced into the main body portion (80b).

The inner peripheral wall of the outer pipe (51) initially has a temperature equal to the earth temperature. After a predetermined time has elapsed since this point, a temperature gradient proportional to the amount of heat dissipated to the heating heat-transfer pipe (80) through the heat medium is generated due to high heat transfer resistance of soil, whereby the temperature of the soil is decreased. Heat transport is controlled so that heat is transferred within a range in which the temperature gradient between the inner wall surface of the outer pipe (51) and the heating heat-transfer pipe (80) is maintained, and in which a temperature distribution under the ground is kept constant. Thus, a part of the heat medium is evaporated into gas by absorbing heat from the soil through the inner wall surface of the outer pipe (51). Heat is absorbed from this gaseous heat medium by the main body portion (80b) of the heating heat-transfer pipe (80), whereby the gaseous heat medium is condensed to liquid. In the present embodiment, since the main body portion (80b) of the heating heat-transfer pipe (80) is placed in the upper part of the outer pipe (51), the liquid heat medium flows downward along the inner peripheral surface of the outer pipe (51). While flowing along the inner peripheral surface of the underground heat exchanger (50), the heat medium is evaporated again by absorbing heat from the soil through the inner wall surface.

Meanwhile, the refrigerant introduced into the main body portion (80b) is evaporated into gas as the main body portion (80b) absorbs heat from the heat medium. This gaseous refrigerant is discharged from the outlet portion (80c) of the heating heat-transfer pipe (80), and is introduced into the suction port of the compressor (3) through the second switch valve (73) and the four-way valve (4). The compressor (3) sucks and compresses the refrigerant, and discharges the compressed refrigerant into the indoor heat exchanger (5) through the four-way valve (4). As described above, in the underground heat exchanger (50), the heating heat-transfer pipe (80) performs heat exchange with the soil by using a change in phase of the heat medium.

The air conditioning system (1) repeatedly performs the above process to perform a refrigeration cycle (in this example, the heating operation) of compressing the refrigerant in the compressor (3) by using the underground heat exchanger (50) as an evaporator.

### (Cooling Operation)

The cooling operation will be described below. In the cooling operation, the four-way valve (4) is switched to the second state. That is, the second port (P2) communicates with the third port (P3), whereas the first port (P1) communicates with the fourth port (P4) (the state shown by broken line in FIG. 7). The first switch valve (72) is switched so that the expansion valve (6) is connected to the outlet portion (52b) of the cooling heat-transfer pipe (52). The second switch valve (73) is switched so that the inlet portion (52a) of the cooling heat-transfer pipe (52) is connected to the third port (P3) of the four-way valve (4).

When the compressor (3) comes into operation, the compressor (3) discharges the compressed refrigerant (gaseous refrigerant) through the discharge port. The refrigerant thus discharged from the compressor (3) is sent to the inlet portion (52a) of the underground heat exchanger (50), and is further introduced into the main body portions (52c, 52d).

At this time, the inner wall surface of the outer pipe (51) initially has a temperature equal to the earth temperature. After a predetermined time has elapsed since this point, the temperature increases in the main body sections (52c, 52d) due to high heat transfer resistance of soil. The amount of heat to be transferred between the outer pipe (51) and the soil is limited by the heat transfer resistance of the soil. Thus, the flow rate of the refrigerant is typically controlled so that heat is transferred within a range in which a temperature gradient between the inner wall surface of the outer pipe (51) and each main body portion (52c, 52d) is maintained, and in which a temperature distribution under the ground is kept constant.

Meanwhile, a part of the heat medium dissipates heat to the soil through the inner wall surface of the outer pipe (51), whereby the part of the heat medium is condensed into liquid. This serves to avoid concentration of the heat transfer in those portions where the inner wall surface of the outer pipe (51) contacts each main body portion (52c, 52d), and to disperse heat dissipation over the entire inner wall surface of the outer pipe (51). This liquid heat medium gradually flows downward along the inner wall surface of the outer pipe (51). As shown in FIGS. 9A-9B, the liquid heat medium is then attracted to the heat medium holding portion (60) formed between the inner wall surface of the outer pipe (51) and the outer wall surface of each main body portion (52c, 52d), by surface tension generated by the heat medium holding portion (60). That is, since each main body portion (52c, 52d) extends from the upper part of the outer pipe (51) to the bottom (the lower end) thereof, the liquid heat medium can be more efficiently brought into contact with each main body portion (52c, 52d).

Since the heat medium condensed in the outer pipe (51) is thus attracted to the outer wall surface of each main body portion (52c, 52d) by the heat medium holding portion (60), the outer wall surface of each main body portion (52c, 52d) is uniformly moistened with the liquid heat medium. The heat medium on the outer wall surface of each main body portion (52c, 52d) is evaporated by absorbing heat from the main body portion (52c, 52d). The heat medium thus evaporated is diffused into the outer pipe (51). The diffused heat medium is recondensed by dissipating heat to the soil through the inner wall surface of the outer pipe (51).

Meanwhile, each main body portion (52c, 52d) dissipates heat to the heat medium contacting the main body portion (52c, 52d). Each main body portion (52c, 52d) further dissipates heat to the soil through the inner wall surface of the outer pipe (51) contacting the main body portion (52c, 52d). Since each main body portion (52c, 52d) dissipates heat in this manner, the refrigerant introduced into each main body portion (52c, 52d) is condensed in the main body portion (52c, 52d). The refrigerant thus condensed is introduced into the expansion valve (6) through the outlet portion (52b) and the first switch valve (72). The expansion valve (6) reduces the pressure of the refrigerant introduced therein, and then introduces the refrigerant into the indoor heat exchanger (5). The refrigerant introduced into the indoor heat exchanger (5) is evaporated by absorbing heat from room air. Thus, the room air is cooled in the indoor heat exchanger (5), and the cooled room air is retuned into the room by the indoor fan (7). The refrigerant evaporated in the indoor heat exchanger (5) is introduced into the suction port of the compressor (3). The compressor (3) sucks and compresses this refrigerant to discharge the compressed refrigerant to the inlet portion (52a) of the underground heat exchanger (50). As described above, in the underground heat exchanger (50), the cooling heat-transfer pipe (52) exchanges heat with the soil by using a change in phase of the heat medium.

The air conditioning system (20) repeats the above process to perform a refrigeration cycle (in this example, the cooling operation) of compressing the refrigerant in the compressor (3) by using the underground heat exchanger (50) as a condenser.

### (Advantages of Embodiment)

As described above, the heating operation and the cooling operation can also be performed by the underground heat exchanger (50) of the embodiment.

In the underground heat exchanger (50) of the present embodiment as well, the main body portion (80b) of the heating heat-transfer pipe (80) is formed in a flat shape. Thus, like the underground heat exchanger (10) of the first embodiment, the heat medium (13) (carbon dioxide) condensed on the outer peripheral surface of the main body portion (80b) is less likely to scatter or fall in the heating operation. Since the heating heat-transfer pipe (80) is formed in a helical shape, the surface area of the heat-transfer pipe (12) in the outer pipe (51) can further be increased. Forming the heat-transfer pipe (12) in the helical shape also enables the heat medium (13) (carbon dioxide) to reliably contact the heat-transfer pipe (12) even if the angle of the underground heat exchanger (50) with respect to the ground surface is shifted from 90 degrees. Efficient heat exchange can be implemented in these respects as well.

In the present embodiment, heat exchange efficiency can further be improved by the grooves provided in the heating heat-transfer pipe (80) and the outer pipe (51) as described above.

Since the heating heat-transfer pipe (80) is placed in the upper part of the outer pipe (51) in the state in which the outer pipe (51) is buried, sufficient time and area can be ensured for the heat medium being liquefied and flowing down, to contact the inner wall of the outer pipe (51). That is, in the present embodiment, efficient heat exchange can be implemented in the heating operation in this respect as well.

In the present embodiment, the heat medium condensed in the outer pipe (51) is attracted to the outer wall surface of each main body portion (52c, 52d) of the cooling heat-transfer pipe (52) by the heat medium holding portion (60). Thus, the outer wall surface of each main body portion (52c, 52d) is uniformly moistened with the liquid heat medium. Accordingly, heat exchange is efficiently performed between the outer wall surface of each main body portion (52c, 52d) and the liquid heat medium, and the refrigerant in the cooling heat-transfer pipe (52) can be efficiently condensed. That is, in the present embodiment, the heat exchange capability of the underground heat exchanger can be improved in the cooling operation as well.

As described above, in the underground heat exchanger (50) of the embodiment as well, the heat exchange fluid can efficiently exchange heat with the soil under the ground. Such increased heat exchange efficiency can reduce the size and the manufacturing cost of the underground heat exchanger, and can simplify the on-site construction work.

### (Modification of Second Embodiment)

An example of the air conditioning system (20) in which the cooling heat-transfer pipe has a modified configuration will be described below.

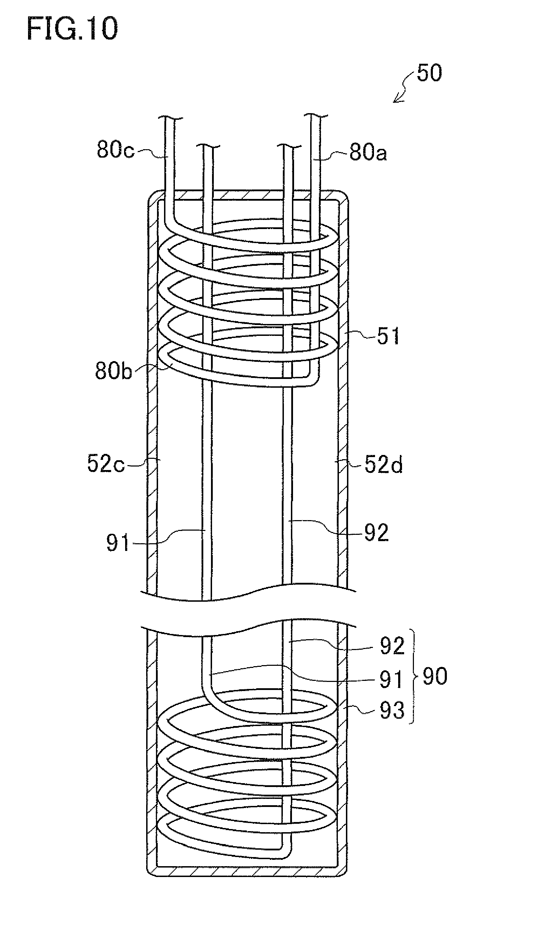

FIG. 10 is a longitudinal cross-section showing a configuration of an underground heat exchanger (50) according to a modification of the second embodiment. The underground heat exchanger (50) includes an outer pipe (51), a heating heat-transfer pipe (80), and a cooling heat-transfer pipe (90). The cooling heat-transfer pipe (90) of the modification includes an inlet portion (91), an outlet portion (92), and a main body portion (93).

The inlet portion (91) is inserted into the outer pipe (51) from the upper side (the side located on the ground surface side in the state in which the outer pipe (51) is buried) of the outer pipe (51), and one end of the inlet portion (91) is connected to the second switch valve (73). The other end of the inlet portion (91) is connected to one end of the main body portion (93) in a lower part of the outer pipe (51). The outlet portion (92) is inserted into the outer pipe (51) from the upper side of the outer pipe (51), and one end of the outlet portion (92) located outside the outer pipe (51) is connected to the first switch valve (72). The other end of the outlet portion (92) is connected to the other end of the main body portion (93) in the lower part of the outer pipe (51).

The main body portion (93) is formed in a helical shape, and is placed in the lower part of the outer pipe (51). In this modification, the main body portion (93) is formed by a flat pipe, like the second main body portion (12e), etc. of the first embodiment. In this example, a cross section of the main body portion (93) has an aspect ratio of 1 : 3 to 1 : 2. This main body portion (93) is placed so that its flat side (that is, one of longitudinal and lateral sides which has a larger dimension) contacts the inner peripheral surface of the outer pipe (51). The main body portion (93) is an example of the flat body of the present invention.

A plurality of grooves (not shown) similar to the grooves (12f) of the heat-transfer pipe (12) are also formed in the outer peripheral surface of the main body portion (93). The grooves of the main body portion (93) are formed so as to extend in the circumferential direction of the main body portion (93), and to extend in the longitudinal direction of the outer pipe (51) in the state in which the cooling heat-transfer pipe (90) is inserted into the outer pipe (51). Since the outer pipe (51) is buried under the ground so that the longitudinal direction of the outer pipe (51) matches the vertical direction, the grooves of the main body portion (90) also extend in the vertical direction.

Configuring the cooling heat-transfer pipe (90) in this manner can provide advantages similar to those provided by the heat-transfer pipe (12) of the first embodiment in the cooling operation. That is, forming the main body portion (93) in a flat shape can reduce the size of a refrigerant accumulating portion formed between the main body portion (93) and the inner peripheral surface of the outer pipe (51), whereby the heat medium (13) condensed on the inner peripheral surface of the outer pipe (51) can be effectively guided to the main body portion (93) in the cooling operation. Since the cooling heat-transfer pipe (90) is formed in a helical shape, the surface area of the cooling heat-transfer pipe (90) in the outer pipe (51) can further be increased, whereby efficient heat exchange can be implemented in this respect as well.

Since the cooling heat-transfer pipe (90) is located in the lower part of the outer pipe (51), the liquid heat medium can be more efficiently brought into contact with the main body portion (93). That is, since the condensed heat medium (13) flows along the inner wall surface of the outer pipe (51) toward the bottom thereof, the cooling heat-transfer pipe (90) of the modification can efficiently receive the heat medium in the lower part of the outer pipe (51).

In the present embodiment as well, as described above, heat exchange efficiency can further be improved by the grooves provided in the heating heat-transfer pipe (80), the cooling heat-transfer pipe (90), and the outer pipe (51).

### (Other Configuration Examples of Heat-Transfer Pipe (Flat Body))

Each of the main body portions (12e, 80b, 93) of the heat-transfer pipe (12), the heating heat-transfer pipe (80), and the cooling heat-transfer pipe (90), namely, the flat body, can be expected to provide similar advantages to the above embodiment and the above modification, even if each main body portion is configured as follows.

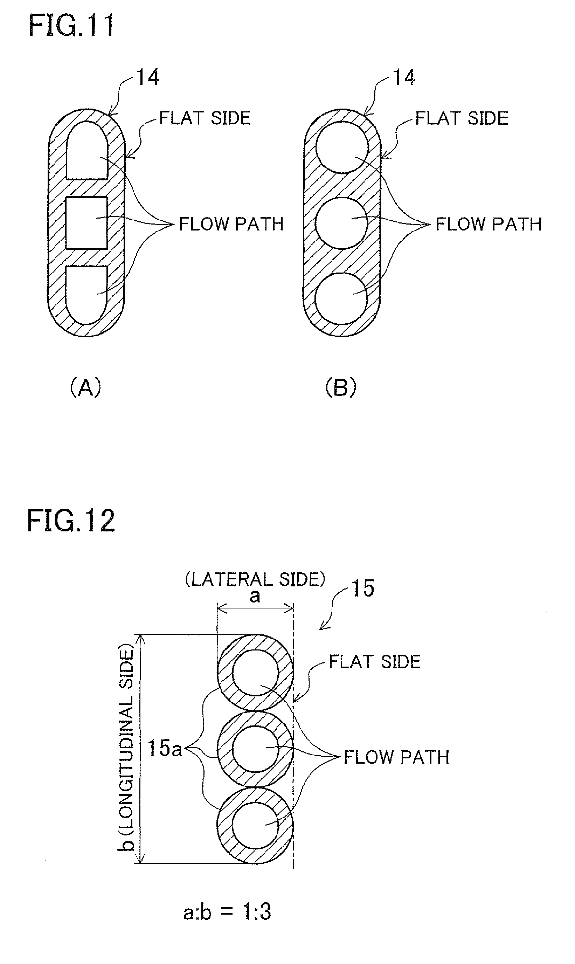

For example, a flat pipe, inside of which is divided into a plurality of flow paths, namely a flat perforated pipe (14), may be used as the main body portion (12e, 80b, 93). FIGS. 11A-11B are diagrams each showing an example of the flat perforated pipe (14), and each showing a cross-sectional shape perpendicular to a flow path direction. This flat perforated pipe (14) has a similar outer shape to the flat pipe (12e) of the heat transfer pipe (12), etc., and as shown by way of example in FIGS. 11A-11B, flow paths having various cross-sectional shapes can be used as the flow paths of the flat perforated pipe (14). Note that the outer shapes of the flat perforated pipe (14) and the flat pipe that forms the heat-transfer pipe (12), etc. are shown by way of example only, and these pipes may have, e.g., an elliptical outer shape.

FIG. 12 shows an example in which the heat-transfer pipe (12), etc. is formed by a composite pipe (15) in which a plurality of pipes (15a) are arranged in a flat shape. In this example, three pipes (15a) having a circular cross section are used to form the composite pipe (15). Thus, this composite pipe (15) has an aspect ratio of approximately 1 : 3. This composite pipe (15) is installed in the outer pipe (11) so that its flat side shown in FIG. 12 contacts the inner peripheral surface of the outer pipe (11). Note that in addition to the pipes having a circular cross section as shown in FIG. 12, pipes having various cross-sectional shapes such as an elliptical cross section may be used as the pipes (15a) that form the composite pipe (15).

As described above, the "flat body" in the present invention means a member whose cross section perpendicular to the flow path direction has an aspect ratio other than 1 : 1, and need not necessarily be shaped to surface-contact the inner peripheral surface of the outer pipe (11). The "flat side" of the flat body means one of the longitudinal and lateral sides of the cross section which has a larger dimension, as described above.

### (Other Embodiments)

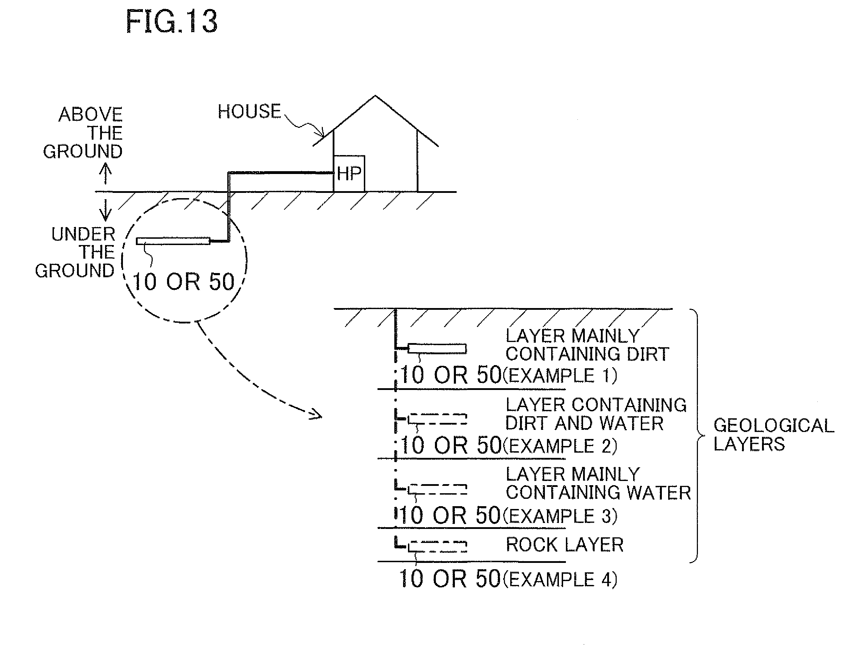

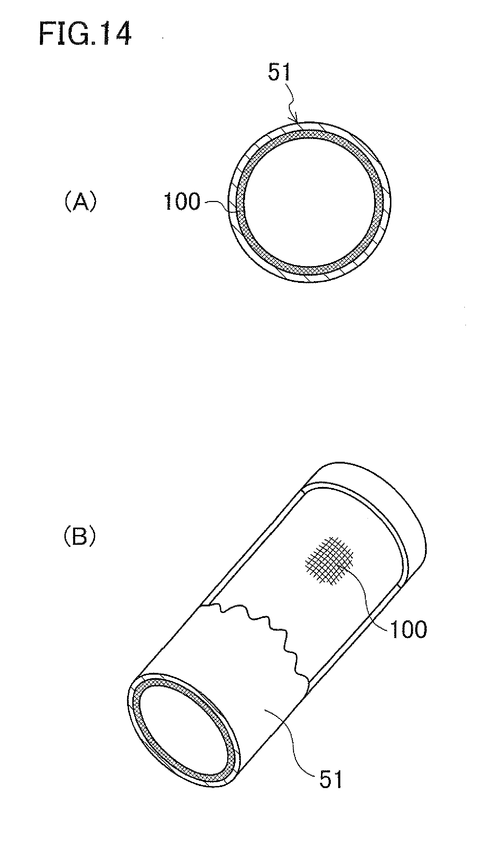

(1) Note that each of the underground heat exchangers (10, 50) may be installed in the horizontal direction. FIG. 13 is a diagram schematically showing a state in which the underground heat exchanger (10, 50) is installed horizontally. This figure shows only one underground heat exchanger (10, 50) for convenience of description. As described above, geological layers include a layer mainly containing only dirt, a layer containing dirt and water, a layer mainly containing water, a rock layer in which rocks are successively distributed, etc. This underground heat exchanger (10, 50) may either be installed in any of the layers, or installed so as to cross multiple ones of the layers. In FIG. 13, Example 1 is an example in which the underground heat exchanger is installed in the layer containing only dirt, Example 2 is an example in which the underground heat exchanger is installed in the layer containing dirt and water, Example 3 is an example in which the underground heat exchanger is installed in the layer mainly containing water, and Example 4 is an example in which the underground heat exchanger is installed in the rock layer.
(2) In the heat-transfer pipe (12), the heating heat-transfer pipe (80), and the cooling heat-transfer pipe (90), a portion other than the main body portion (the portion that contacts the outer pipe (11)) may also be formed as a flat body.
(3) No groove may be provided in the inner peripheral surface of the outer pipe (11), and the outer peripheral surfaces of the heat-transfer pipe (12), the heating heat-transfer pipe (80), and the cooling heat-transfer pipe (90).
(4) As shown in FIGS. 14A-14B, a wick (100) may be provided on the inner wall surface of the outer pipe (51). A liquid heat medium inside the outer pipe (11) penetrates the wick (100), and is held by the wick (100). The wick (100) allows the liquid refrigerant held therein to contact the inner wall surface of the outer pipe (51). For example, a porous metal body, porous ceramic, an aggregation of fibers, etc. may be used as the wick (100). Providing the wick (100) on the inner wall surface of the outer pipe (51) in this manner can ensure uniform moistening of the inner wall surface of the outer pipe (51), and thus improves heat exchange capability particularly in the heating operation.
(5) The heating heat-transfer pipe (80) is not limited to the type described above, as long as the underground heat exchanger (50) functions as a heat exchanger (an evaporator) for heating.
(6) Carbon dioxide used as the heat medium is also shown by way of example only. A material whose phase changes in the temperature range (e.g., about 10°C to +40°C) of the refrigerant of the refrigerant circuit can be used as the heat medium. Specifically, e.g., ammonia, etc. may be used as the heat medium.

### INDUSTRIAL APPLICABILITY

The present invention is useful as heat exchangers that perform heat exchange between heat exchange fluid and soil under the ground.

### DESCRIPTION OF REFERENCE CHARACTERS

- 1: Air Conditioning System
- 2: Refrigerant Circuit
- 3: Compressor (Compression Mechanism)
- 4: Four-Way Valve (Flow Path Switching Portion)
- 5: Indoor Heat Exchanger (Utilization-Side Heat Exchanger)
- 6: Expansion Valve (Expansion Mechanism)
- 10: Underground Heat Exchanger
- 11: Outer Pipe
- 11a: Groove
- 12: Heat-Transfer Pipe
- 12d: First Main Body Portion
- 12e: Second Main Body Portion
- 12e: Second Main Body Portion (Flat Pipe)
- 12f: Groove
- 13: Carbon Dioxide (Heat Medium)
- 15: Composite Pipe
- 15a: Pipe

## Claims

1. An underground heat exchanger, comprising:
an outer pipe (11) that is buried under a ground;
a heat-transfer pipe (12) which is inserted into the outer pipe (11), and in which heat exchange fluid flows; and
a heat medium (13) that is sealed in the outer pipe (11), where
the underground heat exchanger exchanges heat with soil by using a change in phase of the heat medium (13), wherein
at least a part of the heat-transfer pipe (12) is formed by a flat body (12e, ...) that is formed by a flat pipe (12e, 14) or a composite pipe (15) in which a plurality of pipes (15a) are arranged in a flat shape, and
a flat side of the flat body (12e, ...) contacts an inner peripheral surface of the outer pipe (11).

2. The underground heat exchanger of claim 1, wherein
the heat-transfer pipe (12) is formed so as to extend from a top of the outer pipe (11) and to be bent at a bottom of the outer pipe (11) to return to the top.

3. The underground heat exchanger of claim 1, wherein
the heat-transfer pipe (12) includes a first main body portion (12d) extending from a top to a bottom of the outer pipe (11), and a second main body portion (12e) extending from the bottom to the top of the outer pipe (11), and
at least one of the first and second main body portions (12d, 12e) is formed in a helical shape, and a portion having the helical shape is the flat body (12e, ...).

4. The underground heat exchanger of claim 3, wherein
a plurality of grooves (12f), which extend in a direction of gravity in an installed state, are formed in an outer peripheral surface of the heat-transfer pipe (12).

5. The underground heat exchanger of claim 1, wherein
a groove (11a) extending in a circumferential direction of the outer pipe (11) is formed in the inner peripheral surface of the outer pipe (11).

6. The underground heat exchanger of claim 5, wherein
the groove (11a) of the outer pipe (11) is formed so as to extend in a horizontal direction in an installed state.

7. An air conditioning system, comprising:
a refrigerant circuit (2) including the underground heat exchanger (10) of claim 1, a utilization-side heat exchanger (5), a compression mechanism (3), an expansion mechanism (6), and a flow path switching portion (4) that switches a direction in which a refrigerant as the heat exchange fluid flows, wherein
the air conditioning system is configured to be capable of switching between a heating operation and a cooling operation by switching the direction in which the refrigerant flows in the refrigerant circuit (2) by the flow path switching portion (4).
